# EUROPÄISCHE PATENTSCHRIFT

(11) **EP 4 336 289 B1**
(45) Veröffentlichungstag und Bekanntmachung des Hinweises auf die Patenterteilung: **06.05.2026**
(21) Anmeldenummer: 23179018.9
(22) Anmeldetag: 13.06.2023
(51) Int. Cl.: G05B 19/418, B65B 57/10

(54) **VERPACKUNGSANLAGE UND VERFAHREN ZUR STEUERUNG EINER SOLCHEN VERPACKUNGSANLAGE**
PACKAGING SYSTEM AND METHOD FOR CONTROLLING SUCH A PACKAGING SYSTEM
INSTALLATION D'EMBALLAGE ET PROCÉDÉ DE COMMANDE D'UNE TELLE INSTALLATION D'EMBALLAGE

(30) Priorität: 06.09.2022 DE 102022122553
(43) Veröffentlichungstag der Anmeldung: 13.03.2024
(73) Patentinhaber: Krones Aktiengesellschaft, 93073 Neutraubling (DE)
(72) Erfinder: KREIS, Marcus, 93073 Neutraubling (DE); SPINDLER, Herbert, 93073 Neutraubling (DE); KÄSTNER, Florian, 93073 Neutraubling (DE)
(74) Vertreter: Benninger, Johannes

(56) Entgegenhaltungen:
- EP-A1- 2 801 533
- DE-A1- 102020 207 933

## Beschreibung

Die vorliegende Erfindung betrifft eine Verpackungsanlage sowie ein Verfahren zur Steuerung einer solchen Verpackungsanlage.

Aus dem Stand der Technik sind Verfahren und Einrichtungen zum Verpacken von Artikeln bekannt, die als Verpackungsmaterial zum Zusammenhalten mehrerer Artikel eine Schrumpffolie verwenden. Die Artikel, insbesondere Getränkebehältern, Flaschen etc. werden hierbei in gewünschter Anzahl und Anordnung zu Artikelgruppen zusammengestellt.

Die Schrumpffolie wird üblicherweise als Endlosmaterial auf Rollen bereitgestellt. Die Schrumpffolie wird innerhalb der Verpackungseinrichtung entsprechend der Abmessungen der Artikelgruppe vereinzelt. Die Folienzuschnitte werden dann in einem Folieneinschlagmodul mittels eines Einschlagsystems innerhalb der Einrichtung um die Artikel oder Artikelgruppen herumgewickelt. Anschließend werden die mit Schrumpffolie umhüllten Artikelgruppen durch einen Schrumpftunnel transportiert. Im Schrumpftunnel werden die mit Schrumpffolie umhüllten Artikelgruppen mit einem Schrumpfmittel beaufschlagt, wodurch sich die Schrumpffolie zusammenzieht, so dass sie sich an die Artikel anschmiegt und die fertigen Schrumpfgebinde entstehen. Als Schrumpfmittel findet insbesondere warme oder heiße Luft Verwendung.

Bei den Verpackungsanlagen werden die Artikelgruppen im Bereich zwischen dem Folieneinschlagmodul und dem Schrumpfmodul in der Regel über verschiedene unterschiedliche Transportbänder geführt, welche notwendig sind, um die unterschiedlichen Verarbeitungsgeschwindigkeiten zwischen dem Folieneinschlagmodul und dem Schrumpfmodul auszugleichen. Problematisch sind hierbei kleine Lücken zwischen den zu einer Artikelgruppe zusammengefassten Artikeln. Durch den Übergang der Artikelgruppen von einem Transportband zum nächsten können solche Lücken zwischen den Artikeln innerhalb einer Artikelgruppe in Transportrichtung weiter vergrößert werden. Insbesondere schlagen die Artikel bei jedem Übergang in ihren oberen Bereichen aneinander, wodurch sich der Abstand im Aufstandsbereich der Artikel erhöht. Auch andere Gründe können für eine Lückenbildung verantwortlich sein, beispielsweise Vibrationen innerhalb der Verpackungsanlage. Ein weiteres Problem können Verschmutzungen innerhalb der Verpackungsanlage sein, welche insbesondere zu einem Schlupf der Verpackungseinheiten relativ zu den jeweiligen Transportbändern o.ä. führen können. Auch durch Unwuchten, welche beispielsweise durch innerhalb der Artikel schwappende Flüssigkeit entstehen, kann sich die Position der Artikel in ungewünschter Weise verändern.

Die Lücken zwischen den Artikeln bleiben auch beim Aufschrumpfen der Schrumpffolie auf die Artikelgruppe bestehen. Die dabei ausgebildeten Schrumpfgebinde weisen aufgrund dieser Lücken eine geringere Stabilität auf. Insbesondere besteht die Gefahr, dass diese weniger stabilen Schrumpfgebinde bei der nachfolgenden Handhabung, beispielsweise bei der nachfolgenden Palettierung, kaputt gehen und somit den Produktionsfluss hemmen.

DE 10 2020 207 933 A1 und EP 2 801 533 A1 offenbaren Verfahren zum Erkennen fehlerhafter Verpackungseinheiten.

Eine Aufgabe der vorliegenden Erfindung besteht darin, die Merkmale fehlerhafter Gebinde zu erkennen.

Die obige Aufgabe wird durch ein Verfahren zur Steuerung einer Verpackungsanlage und eine Verpackungsanlage gelöst, die die Merkmale in den unabhängigen Ansprüchen umfassen. Weitere vorteilhafte Ausgestaltungen werden durch die Unteransprüche beschrieben.

Die Erfindung bezieht sich auf ein Verfahren zur Steuerung einer Verpackungsanlage zur Herstellung von Verpackungseinheiten. In einem ersten Verfahrensschritt werden Artikelgruppen umfassend mindestens zwei Artikel gebildet. Eine zur Ausführung des Verfahrens geeignete Verpackungsanlage umfasst insbesondere ein Einteilmodul zur Zusammenstellung von mindestens zwei Artikeln zu einer Artikelgruppe.

Bei den Artikeln kann es sich bevorzugt um Getränkebehälter handeln, insbesondere Flaschen oder Dosen aus Glas, Metall und/oder Kunststoff. Dementsprechend ist die Verpackungsanlage vorzugsweise zur Handhabung von Getränkebehältern ausgebildet. Die Verpackungsanlage ist Bestandteil einer Getränkebehandlungsanlage.

In einem nachfolgenden Verfahrensschritt wird mindestens ein Größenparameter der Artikelgruppe beim Durchlaufen mindestens eines Transportbereichs sensorisch erfasst. Daran anschließend wird der mindestens eine Größenparameter mit einem Sollwert verglichen. Eine Ausführungsform kann vorsehen, dass es sich bei dem Sollwert um einen definierten Sollwert handelt, welcher in der Steuerungseinheit als Information abgespeichert ist. Beispielsweise wird durch einen entsprechend ausgebildeten Sensor eine Länge der Artikelgruppe parallel zur Transportrichtung ermittelt und der Wert wird an die Steuerungseinrichtung übermittelt, die diesen mit dem abgespeicherten Sollwert vergleicht.

Aus der Länge einer Artikelgruppe kann man wertvolle Informationen zu Eigenschaften der Artikelgruppe und/oder einer aus der Artikelgruppe hergestellten Verpackungseinheit erhalten.

Ein Beispiel hierfür sind Informationen zu Lücken zwischen den Artikeln innerhalb der Artikelgruppe. Verpackungsanlagen umfassen häufig mehrere fluchtend angeordnete Transportbänder, um unterschiedliche Verarbeitungsgeschwindigkeiten zwischen den verschiedenen Handhabungsmodulen innerhalb der Verpackungsanlage auszugleichen. Problematisch sind hierbei kleine Lücken zwischen den zu einer Artikelgruppe zusammengefassten Artikeln.

Durch den Übergang der Artikelgruppen von einem Transportband zum nächsten oder einem nachfolgenden Transportband werden die Lücken in Transportrichtung weiter vergrößert. Bei jedem Übergang schlagen die Artikel in ihren oberen Bereichen aneinander, wodurch sich der Abstand im Aufstandsbereich der Artikel erhöht. Dies führt zur Ausbildung fehlerhafter Artikelgruppen, die durch die beschriebenen verschiedenen Ausführungsformen des Verfahrens einfach und sicher erkannt werden können. Wie bereits oben beschrieben, können Lücken zwischen den Artikeln oder Fehlpositionierungen der Artikel auch auf andere Weise entstehen.

Insbesondere findet die sensorische Erfassung statt, während die Artikelgruppen über den Transportbereich der Verpackungsanlage in einer Transportrichtung zu einem nachfolgenden Verpackungsmodul transportiert werden. In dem Verpackungsmodul werden die Artikelgruppen mit Hilfe mindestens eines Verpackungsmittels zu einer Verpackungseinheit zusammengefasst. Die fertigem Verpackungseinheiten werden über einen weiteren Transportbereich abtransportiert und insbesondere weiteren, hier nicht gezeigten, Verpackungs- und/oder Verarbeitungsstationen zugeführt, bspw. einem Palettiermodul o. dgl.

Die Transportbereiche können hierbei jeweils mindestens einen Endlosförderer umfassen, insbesondere können die Transportbereiche aus ein oder mehreren fluchtenden Horizontalfördereinrichtungen gebildet sein.

Der Sensor kann vorzugsweise als Lichtschrankenanordnung oder als Kamerasystem mit Bildauswertung ausgebildet sein. Insbesondere kann der Sensor durch eine Lichtschrankenanordnung gebildet sein, welche sich oberhalb des Transportbereichs zwischen dem Einteilmodul und dem Verpackungsmodul quer zur Transportrichtung der Artikelgruppen erstreckt.

Durch die Lichtschrankenanordnung kann die exakte Länge der Artikelgruppe oder die relative Position der Artikelgruppe innerhalb der Verpackungsanlage bestimmt werden. Es wird der Begriff relative Position verwendet, da die Artikelgruppe zum Zeitpunkt der sensorischen Erfassung nicht statisch ist, sondern in einer Transportrichtung bewegt wird, so dass sich die Position kontinuierlich innerhalb der Verpackungsanlage ändert.

Bei Ermittlung einer Abweichung zwischen dem Größenparameter und dem Sollwert wird auf ein Fehlerereignis geschlossen und die Artikelgruppe als "korrekt" oder "fehlerhaft" eingestuft. Eine von einem Sollwert abweichende Größe kann auch einen Hinweis liefern, dass beispielsweise Artikel zerdrückt oder umgefallen sind. Aus diesem Grund führen auch Größenparameter, die einen zu kleinen Wert aufweisen, zur Einstufung der Schrumpfgebinde als fehlerhaft.

Der Fehler kann beispielsweise darin liegen, dass eine Lücke zwischen den Artikeln innerhalb der Artikelgruppe ausgebildet ist, welche Lücke beim nachfolgenden Verpackungsprozess zur Ausbildung fehlerhafter Verpackungseinheiten führt. Alternativ kann eine solche Lücke beim nachfolgenden Handhabungsprozess zu einem Fehler führen, der gegebenenfalls durch Blockierung von Maschinenkomponenten o.ä. zu einem Betriebsstopp eines nachfolgenden Handhabungsmoduls oder der gesamten Verpackungsanlage führen kann.

Alternativ oder zusätzlich kann der Fehler darin liegen, dass ein oder mehrere Artikel der Artikelgruppe deformiert ist/sind. Auch ist es möglich, dass ein oder mehrere Artikel der Artikelgruppe innerhalb der Artikelgruppe falsch positioniert ist/sind. Ein weiterer Fehler kann in einer falschen Ausrichtung eines Artikels innerhalb der Artikelgruppe liegen, beispielsweise kann es sich dabei um mindestens einen umgefallenen Artikel handeln.

Vorzugsweise ist vorgesehen, dass beim Erkennen einer fehlerhaften Artikelgruppe oder beim Erkennen einer nachfolgend beschriebenen fehlerhaften Positionierung der Artikelgruppe innerhalb der Verpackungsanlage ein Ereignis definiert wird, welches Ereignis Steuerparameter für prozessbeeinflussende oder prozessverändernde Steuervorgaben im Verfahren generiert.

Eine Ausführungsform sieht vor, dass der Steuerparameter zu einem Anhalten zumindest des betroffenen Teilabschnittes der Verpackungsanlage führt. In diesem Fall muss ein Benutzer den Fehler beheben und die Verpackungsanlage neu starten.

Alternativ kann beim Erkennen einer fehlerhaften Artikelgruppe oder einer fehlerhaften Positionierung der Artikelgruppe ein Ereignis definiert werden, aus welchem Ereignis ein Fehlerereignis abgeleitet wird, das zumindest gespeichert und über eine Benutzerschnittstelle visualisiert oder auf sonstige Weise einem Benutzer zugänglich gemacht wird.

Insbesondere kann der Benutzer über die Benutzerschnittstelle somit zeitnah informiert werden, um gegebenenfalls entsprechende Maßnahmen einleiten zu können. Optional kann zusätzlich ein akustisches Warnsignal vorgesehen sein, um den Benutzer auf die neu bereitgestellte Information zeitnah aufmerksam zu machen.

Als Größenparameter wird eine Position der Artikelgruppe auf dem Transportbereich ermittelt, d.h. eine Position der Artikelgruppe innerhalb der Verpackungsanlage. Dann liegt der Fehler darin, dass die Position der Artikelgruppe von ihrer Soll- Position abweicht. In diesem Fall entspricht beispielsweise der Abstand zwischen in Transportrichtung aufeinanderfolgenden Artikelgruppen nicht mehr einem für die nachfolgende Handhabung notwendigen Soll- Abstand. Dies ist problematisch, da eine fehlerhafte Positionierung der Artikelgruppen zu Problemen bei der nachfolgenden Handhabung führen kann.

Eine Fehl- Positionierung entsteht dadurch, dass die Artikelgruppe einen Schlupf gegenüber einer Transporteinrichtung aufweist, welcher Schlupf durch eine Verschmutzung der Transporteinrichtung entsteht. Somit kann eine solche Fehl- Positionierung insbesondere auf eine mögliche Verschmutzung des Transportbereichs oder einer Transporteinrichtung innerhalb des Einteilmoduls hinweisen.

In diesem Fall erfolgt eine Visualisierung über die Benutzerschnittstelle, die den Benutzer zur Überprüfung der Transportbereiche und/oder Transporteinrichtungen auf Verschmutzung hin auffordert.

In diesem Zusammenhang erfolgt eine Visualisierung eines bestimmten Transportbereichs, welcher hierbei zuerst vom Benutzer überprüft werden sollte.

Eine weitere Ausführungsform sieht vor, dass aus dem definierten Ereignis zumindest ein Steuerparameter abgeleitet wird, aus dem prozessbeeinflussende oder prozessverändernde Steuervorgaben für das Verfahren gebildet werden.

Beispielsweise kann der Steuerparameter die Aktivierung einer Entnahmeeinrichtung vorsehen, welche Entnahmeeinrichtung ausgebildet ist, die als fehlerhaft erkannte Artikelgruppe vor der weiteren Handhabung aus der Verpackungsanlage zu entnehmen oder somi aus dem Verpackungsprozess auszuschleusen.

Alternativ kann eine hinter dem Verpackungsmodul angeordnete Entnahmevorrichtung vorgesehen sein, welche dazu ausgebildet ist, die aus einer fehlerhaft erkannten Artikelgruppe gebildete Verpackungseinheit vor der weiteren Handhabung aus der Verpackungsanlage zu entnehmen oder aus dem Verpackungsprozess auszuschleusen.

Die Entnahmeeinrichtung kann beispielsweise durch einen Roboter gebildet sein, welcher Roboter die als fehlerhaft erkannten Artikelgruppen oder Verpackungseinheiten erfasst und in eine Ausschussbox überführt. Alternativ kann die Entnahmeeinrichtung durch einen Schieber o.ä. gebildet wird, welcher Schieber querbeweglich zu der Transportrichtung der Artikelgruppen oder Verpackungseinheiten ausgebildet ist und welcher Schieber die als fehlerhaft erkannten Artikelgruppen oder Verpackungseinheiten in eine Ausschussbox überführt, welche Ausschussbox neben dem die Artikelgruppen oder Verpackungseinheiten der weiteren Handhabung zuführenden Transportbereich angeordnet ist.

Eine Ausführungsform der Verpackungsanlage kann vorsehen, dass das Verpackungsmodul durch ein Faltmodul gebildet ist, in welchem Faltmodul die Artikelgruppen jeweils zumindest teilweise mit einem aus einem Kartonzuschnitt gebildeten Umverpackungsmaterial umhüllt werden. Insbesondere wird die Artikelgruppe auf einem Kartonzuschnitt angeordnet und durch Falten des Kartonzuschnitts wird ein die Artikelgruppe umhüllender Umkarton gebildet. Alternativ kann die Artikelgruppe auf einem Kartonzuschnitt angeordnet werden, der nachfolgend durch Auffalten von Randbereichen zu einem Tray ausgebildet wird.

Eine alternative Ausführungsform der Verpackungsanlage kann vorsehen, dass das Verpackungsmodul durch ein Einsetzmodul gebildet ist, in welchem Einsetzmodul die Artikelgruppen jeweils in einen Karton oder ein Tray oder ein Basket eingesetzt werden.

Eine alternative Ausführungsform der Verpackungsanlage kann vorsehen, dass das Verpackungsmodul durch ein Applikationsmodul gebildet wird, in welchem Applikationsmodul die Artikelgruppen jeweils zumindest teilweise mit einem Kartonzuschnitt zusammengefasst werden, welcher Kartonzuschnitt von oben auf die Artikel appliziert wird, so dass die Artikel zumindest bereichsweise innerhalb von Durchtrittsöffnungen des Kartonzuschnitts aufgenommen sind. Die dadurch hergestellten Verpackungseinheiten werden auch als Greifkartonverpackungen bezeichnet.

Eine alternative Ausführungsform der Verpackungsanlage kann vorsehen, dass das Verpackungsmodul durch ein Klebemodul gebildet wird, in welchem Klebemodul die Artikelgruppen jeweils zumindest teilweise durch ein Klebemittel zusammengefasst werden, welches Klebemittel zwischen die Artikel eingebracht wird, so dass die Artikel haftend miteinander verbunden werden. Die dadurch hergestellten Verpackungseinheiten werden auch als Klebegebinde bezeichnet.

Eine alternative Ausführungsform der Verpackungsanlage kann vorsehen, dass das Verpackungsmodul durch ein Umreifungsmodul gebildet wird, in welchem Umreifungsmodul die Artikelgruppen jeweils zumindest teilweise mit einem die Artikelgruppe umspannenden Umreifungsband zusammengefasst werden, insbesondere wobei das Umreifungsband die Außenmantelflächen der Artikel teilweise umspannt und die Artikel unter Spannung zusammenhält. Die dadurch hergestellten Verpackungseinheiten werden auch als Umreifungsgebinde bezeichnet.

Gemäß einer weiteren Ausführungsform kann die Verpackungsanlage ein Folieneinschlagmodul und ein Schrumpfmodul umfassen, welches Folieneinschlagmodul dazu ausgebildet ist, die Artikelgruppe mit einem aus Schrumpffolie bestehenden Folienzuschnitt zu umhüllen und welches Schrumpfmodul dazu ausgebildet ist, die Schrumpffolie unter Ausbildung eines Schrumpfgebindes auf die Artikelgruppe aufzuschrumpfen.

Eine weitere Ausführungsform des Verfahrens kann vorsehen, dass ein erster Größenparameter der Artikelgruppe sensorisch erfasst wird, und dass nach Durchlaufen mindestens eines Transportbereichs oder nach Durchlaufen mindestens eines Teilabschnitts eines Transportbereichs oder nach Durchlaufen mindestens eines Handhabungsmoduls der Verpackungsanlage ein zweiter Größenparameter der Artikelgruppe sensorisch erfasst wird. Durch Bewertung und Vergleich des ersten Größenparameter mit dem zweiten Größenparameter wird mindestens ein Merkmalsparameter der Verpackungseinheit ermittelt.

Insbesondere ist ein erster Sensor einem Transportbereich oder einem Handhabungsmodul der Verpackungsanlage zugeordnet. Der zweite Sensor ist einem anderen Transportbereich der Verpackungsanlage oder einem anderen Handhabungsmodul der Verpackungsanlage zugeordnet Der zweite Sensor kann auch einem nachgeordneten Transportbereich des Transportbereichs zugeordnet sein, an welchem der erste Sensor angeordnet ist.

Weiterhin umfasst die Verpackungsanlage eine Steuerungseinrichtung, die dazu ausgebildet ist, die Daten des ersten Sensors und des zweiten Sensors zu bewerten und zu vergleichen und dadurch Merkmalsparameter der Verpackungseinheit zu ermitteln, insbesondere können der erste Größenparameter und der zweite Größenparameter miteinander verglichen.

Besonders bevorzugt ist vorgesehen, dass die Steuerungseinrichtung den vom ersten Sensor ermittelten Wert als Sollwert bewertet, und diesen mit dem durch den zweiten Sensor ermittelten Größenparameter vergleicht.

Eine alternative Ausführungsform kann vorsehen, dass ein definierter Sollwert in der Steuerungseinrichtung als Information abgespeichert ist und dass der ermittelte erste Größenparameter und der zweiter Größenparameter aufgrund dieser Sollwert-Information bewertet und miteinander und mit der Sollwert-Information verglichen werden. Insbesondere kann hierbei eine Ausbildung von Lücken zwischen den Artikeln einer Artikelgruppe und gegebenenfalls eine Vergrößerung der Lücken innerhalb der Verpackungsanlage genauer analysiert und bewertet werden.

Diese weitere Ausführungsform des Verfahrens wird nachfolgend anhand einer Verpackungsanlage erläutert, welche Verpackungsanlage ein Folieneinschlagmodul und ein Schrumpfmodul umfasst. Die hier beschriebenen Merkmale können jedoch auch ohne weiteres auf eine Verpackungsanlage mit einem anderen Verpackungsmodul übertragen werden, beispielsweise auf eine Verpackungsanlage mit einem Faltmodul, einem Umreifungsmodul o.ä.

Eine zur Durchführung der weiteren Ausführungsform des Verfahrens ausgebildete Verpackungsanlage umfasst beispielsweise ein als Einteilmodul ausgebildetes erstes Handhabungsmodul, in welchem Einteilmodul Artikel zu Artikelgruppen zusammengestellt werden. Die Artikelgruppen werden auf einem ersten Transportbereich in Transportrichtung zu einem als Folieneinschlagmodul ausgebildeten zweiten Handhabungsmodul befördert, in welchem Folieneinschlagmodul die Artikelgruppen mit einem thermoplastischen Verpackungsmaterial in Form einer Schrumpffolie umhüllt werden.

Die derart mit Verpackungsmaterial umhüllten Artikelgruppen werden über einen zweiten Transportbereich einem als Schrumpfmodul ausgebildeten dritten Handhabungsmodul zugeführt. In dem Schrumpfmodul werden die mit Verpackungsmaterial umhüllten Artikelgruppen mit einem Schrumpfmittel beaufschlagt. Das Schrumpfmittel bewirkt, dass das Verpackungsmaterial um die Artikel der Artikelgruppe aufschrumpft, wobei eine Verpackungseinheit in Form eines Schrumpfgebindes gebildet wird.

Die fertigem Schrumpfgebinde werden über einen nachfolgenden Transportbereich weiteren Verpackungs- und/oder Verarbeitungsstationen zugeführt, bspw. einem Palettiermodul o. dgl.

Zur Ermittlung der ersten und zweiten Größenparameter umfasst die Verpackungsanlage einen zur Ermittlung mindesten eines ersten Größenparameters der Artikelgruppe ausgebildeten ersten Sensor und einen zur Ermittlung mindesten eines zweiten Größenparameters der Artikelgruppe ausgebildeten zweiten Sensor, wobei die beiden Sensoren jeweils unterschiedlichen Transportbereichen oder unterschiedlichen Handhabungsmodulen der Verpackungsanlage zugeordnet sind.

Eine Ausführungsform kann vorsehen, dass der erste Sensor zwischen dem Einteilmodul und dem Folieneinschlagmodul angeordnet ist und einen ersten Größenparameter der Artikelgruppe ermittelt.

Die Formulierung der Anordnung zwischen dem Einteilmodul und dem Folieneinschlagmodul umfasst hierbei nicht nur den Transportbereich, sondern auch einen Übergangsbereich zwischen dem Einteilmodul und dem Transportbereich bzw. einen Übergangsbereich zwischen dem Transportbereich und dem Folieneinschlagmodul.

Der zweite Sensor kann beispielsweise zwischen dem Folieneinschlagmodul und dem Schrumpfmodul angeordnet sein und dient der Ermittlung mindesten eines zweiten Größenparameters der mit Schrumpffolie umhüllten Artikelgruppe.

Alternativ kann der zweite Sensor im Ausgangsbereich des Schrumpfmoduls oder in einem in Transportrichtung nach dem Schrumpfmodul ausgebildeten, durch den nachfolgenden Transportbereich gebildeten Abförderbereich angeordnet sein. In diesem Fall dient der zweite Sensor der Ermittlung mindesten eines zweiten Größenparameters der als Schrumpfgebinde zusammengefassten Artikelgruppe.

Gemäß einer alternativen Ausführungsform kann der erste Sensor zwischen dem Folieneinschlagmodul und dem Schrumpfmodul angeordnet sein, wobei ein derartig angeordneter erster Sensor insbesondere zur Ermittlung mindesten eines ersten Größenparameters einer mit Schrumpffolie umhüllten Artikelgruppe dient.

Die Formulierung der Anordnung zwischen dem Folieneinschlagmodul und dem Schrumpfmodul umfasst hierbei nicht nur den dazwischen angeordneten Transportbereichs, sondern auch einen Übergangsbereich zwischen dem Folieneinschlagmodul und dem Transportbereich bzw. ein Übergangsbereich zwischen dem Transportbereich und dem Schrumpfmodul.

Der zweite Sensor ist bei dieser Ausführungsform vorzugsweise im Ausgangsbereich des Schrumpfmoduls oder in einem in Transportrichtung nach dem Schrumpfmodul ausgebildeten, durch den nachfolgenden Transportbereich gebildeten Abförderbereich angeordnet und dient der Ermittlung mindesten eines zweiten Größenparameters der als Schrumpfgebinde zusammengefassten Artikelgruppe.

Eine weitere Ausführungsform kann vorsehen, dass die beiden Sensoren beabstandet zueinander an einem Transportbereich angeordnet sind, so dass zuerst durch den ersten Sensor ein erster Größenparameter der Artikelgruppe oder der mit Verpackungsmittel umhüllten Artikelgruppe erfasst wird und dass nach Durchlaufen eines Teilabschnitts des entsprechenden Transportbereichs ein zweiter Größenparameter der Artikelgruppe oder der mit Verpackungsmittel umhüllten Artikelgruppe erfasst wird.

In allen Varianten wird durch den ersten Sensor beispielsweise eine erste Länge der Artikelgruppe oder eine erste Länge der mit Verpackungsmittel umhüllten Artikelgruppe parallel zur Transportrichtung ermittelt. Weiterhin wird durch den zweiten Sensor als zweiter Größenparameter eine zweite Länge der Artikelgruppe oder eine zweite Länge der mit Verpackungsmittel umhüllten Artikelgruppe oder eine zweite Länge der als Verpackungseinheit zusammengefassten Artikelgruppe parallel zu einer Transportrichtung der Artikelgruppe oder parallel zu einer Transportrichtung der mit Verpackungsmittel umhüllten Artikelgruppe oder parallel zu einer Transportrichtung der als Verpackungseinheit zusammengefassten Artikelgruppe ermittelt. Durch eine Steuerungseinrichtung der Verpackungsanlage werden die erste und die zweite Länge bewertet und miteinander verglichen.

Alternativ kann vorgesehen sein, dass durch den ersten Sensor und/oder den zweiten Sensor eine Position der Artikelgruppe oder der mit Verpackungsmittel umhüllten Artikelgruppe oder der als Verpackungseinheit zusammengefassten Artikelgruppe ermittelt wird, welche mit einer Soll-Position verglichen wird.

Bei der Soll-Position handelt es sich insbesondere um eine relative Position innerhalb der Verpackungsanlage zu einem bestimmten Zeitpunkt. Eine fehlerhafte Positionierung kann beispielsweise einen Hinweis auf eine Verschmutzung von Transporteinrichtungen innerhalb der Verpackungsanlage geben.

Der erste Sensor und/oder der zweite Sensor können vorzugsweise als Lichtschrankenanordnung oder als Kamerasystem mit Bildauswertung ausgebildet sein. Insbesondere können der erste Sensor und/oder der zweite Sensor durch eine Lichtschrankenanordnung gebildet sein, welche sich oberhalb der Transportstrecke für die Artikelgruppen, die mit Verpackungsmittel umhüllten Artikelgruppen oder die Verpackungseinheiten quer zur Transportrichtung erstreckt.

Durch die Lichtschrankenanordnung kann je nach deren Anordnung innerhalb der Verpackungsanlage die exakte Länge der Artikelgruppe, der mit Verpackungsmittel umhüllten Artikelgruppe oder der als Verpackungseinheit zusammengefassten Artikelgruppe bestimmt werden.

Die ermittelte Länge kann insbesondere mit Informationen zu einer Soll-Länge verglichen werden, welche Informationen zur Soll-Länge insbesondere in der Steuerungseinrichtung eingespeichert sind. Alternativ kann die Soll-Länge direkt im Anschluss an die Ausbildung der Artikelgruppe innerhalb des Einteilmoduls oder am Ausgang des Einteilmoduls sensorisch ermittelt werden. Gegebenenfalls kann dies bereits der Erfassung durch den ersten Sensor entsprechen.

Besonders bevorzugt umfasst die Verpackungsanlage eine Benutzeroberfläche, über welche beispielsweise bei einem Produktwechsel durch einen Benutzer neue Soll-Längen eingegeben werden können. Die derart neu definierten Soll-Längen werden anschließend der Steuerungseinrichtung als Informationen bereitgestellt.

Weiterhin kann bei der Bewertung und dem Vergleich der ermittelten Größenparameter ein Korrekturfaktor einbezogen werden, welcher Korrekturfaktor die Eigenschaften des Verpackungsmaterials berücksichtigt, beispielsweise die Dicke des Verpackungsmaterials, die Veränderung bei Schrumpfung der Schrumpffolie etc.

Vorzugsweise wird aus dem mindestens einen ermittelten Merkmalsparameter eine Aussage über die Qualität der Verpackungseinheit abgeleitet. Beispielsweise sind Lücken zwischen den Artikeln innerhalb eines Schrumpfgebindes ein Indiz für fehlerhafte Schrumpfgebinde, insbesondere lockere Schrumpfgebinde, welche in der nachfolgenden Handhabung zu Problemen im Produktionsablauf führen können. Eine von einem Sollwert abweichende Größe kann auch einen Hinweis liefern, dass beispielsweise Artikel zerdrückt oder umgefallen sind. Aus diesem Grund führen auch Größenparameter, die einen zu kleinen Wert aufweisen, zur Einstufung der Schrumpfgebinde als fehlerhaft.

Beispielsweise sieht eine Ausführungsform vor, dass aus den ersten Größenparametern und den zweiten Größenparametern eine Ausbildung eines Abstands zwischen den Artikeln im Schrumpfgebinde ermittelt wird, welcher Abstand zur Ausbildung deformierter und/oder instabiler Schrumpfgebinde führt. Somit ist es möglich, die jeweiligen Schrumpfgebinde als "korrekt" oder als "fehlerhaft" einzustufen.

Beim Erkennen fehlerhafter Schrumpfgebinde kann ein Ereignis definiert werden, welches Ereignis Steuerparameter für prozessbeeinflussende oder prozessverändernde Steuervorgaben im Verfahren generiert.

Eine Ausführungsform sieht vor, dass aus dem definierten Ereignis ein Fehlerereignis abgeleitet wird, das zu einem Anhalten zumindest des betroffenen Teilabschnittes der Verpackungsanlage führt, insbesondere damit das fehlerhafte Schrumpfgebinde entnommen werden kann.

Eine andere Ausführungsform sieht vor, dass aus dem definierten Ereignis zumindest ein Steuerparameter abgeleitet wird, aus dem prozessbeeinflussende oder prozessverändernde Steuervorgaben für das Verfahren gebildet werden. Beispielsweise kann der Steuerparameter die Aktivierung einer Entnahmeeinrichtung vorsehen, welche Entnahmeeinrichtung dazu ausgebildet ist, die als fehlerhaft erkannten Schrumpfgebinde vor der weiteren Handhabung aus der Verpackungsanlage zu entnehmen und somit aus dem Verpackungsprozess auszuschleusen.

Eine weitere Ausführungsform kann vorsehen, dass aus dem definierten Ereignis ein Fehlerereignis abgeleitet wird, das zumindest gespeichert und über die Benutzerschnittstelle visualisiert oder auf sonstige Weise einem Benutzer zugänglich gemacht wird. Insbesondere wird der Benutzer über die Benutzerschnittstelle somit zeitnah informiert, um gegebenenfalls entsprechende Maßnahmen einleiten zu können. Optional kann zusätzlich ein akustisches Warnsignal vorgesehen sein, um den Benutzer auf die neu bereitgestellte Information zeitnah aufmerksam zu machen.

Für das hier beschriebene Verfahren ist es nicht zwingend notwendig, die Verpackungsanlage mit weiteren Sensoren auszustatten, um die beschriebene Überwachung durchführen zu können. Stattdessen können bereits in der Verpackungsanlage vorhandene Sensoren verwendet werden, deren ermittelte Daten nunmehr in neuer Weise bewertet und analysiert werden. Es ist in diesem Fall nur notwendig, eine Steuerungseinrichtung der Verpackungsanlage mit entsprechenden Informationen und/oder Bewertungsalgorithmen auszustatten, um das vorbeschriebene Verfahren durchzuführen.

Mit dem hier beschriebenen Verfahren führen Abweichungen, die durch den mindestens einen Sensor ermittelt werden, nicht automatisch zu einem Anlagenstopp. Stattdessen können Produktionsfehler frühzeitig erkannt und entsprechende Warnmeldungen erzeugt werden. Somit ist eine lokale Fehlerbehebung möglich, ohne dass die gesamte Verpackungsanlage angehalten werden muss, was jeweils zu größeren Produktionsausfällen führen würde.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Die Fig. 1 zeigt eine schematische Ansicht einer ersten Ausführungsvariante einer Verpackungsanlage zur Herstellung von Verpackungseinheiten.
Fig. 2 zeigt eine schematische Ansicht einer zweiten Ausführungsvariante einer Verpackungsanlage zur Herstellung von Schrumpfgebinden.
Fig. 3 zeigt in perspektivischer Darstellung eine dritten Ausführungsvariante einer Verpackungsanlage zur Herstellung von Schrumpfgebinden.
Fig. 4 zeigt in perspektivischer Darstellung eine vierten Ausführungsvariante einer Verpackungsanlage zur Herstellung von Schrumpfgebinden.
Fig. 5 zeigt ein Detail der in Fig. 4 dargestellten Ausführungsvariante.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

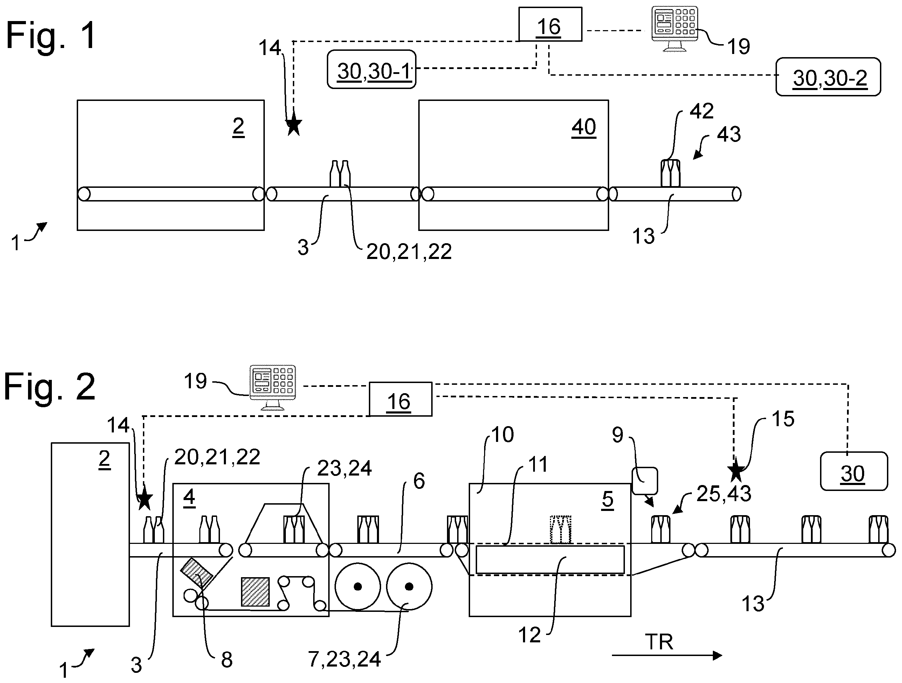

Die Fig. 1 zeigt eine schematische Seitenansicht einer ersten Ausführungsvariante einer Verpackungsanlage 1 zur Herstellung von Verpackungseinheiten 43.

Die Verpackungsanlage 1 umfasst ein als Einteilmodul 2 ausgebildetes erstes Handhabungsmodul, in welchem Artikel 20, beispielsweise Flaschen 21 oder Dosen o.ä. zu Artikelgruppen 22 zusammengestellt werden. Die Artikelgruppen 22 werden auf einem Transportbereich 3 in Transportrichtung TR zu einem Verpackungsmodul 40 befördert, in welchem die Artikelgruppen 22 mit einem Verpackungsmittel 42 zu einer Verpackungseinheit 43 zusammengefasst werden.

Die fertigen Verpackungseinheiten 43 werden über einen Transportbereich 13 weiteren Verpackungs- und/oder Verarbeitungsstationen zugeführt (nicht dargestellt), bspw. einem Palettiermodul o. dgl.

Es ist vorgesehen, dass ein Größenparameter der Artikelgruppe 22 sensorisch erfasst wird und dass dieser Größenparameter mit einem definierten Sollwert verglichen wird.

Hierfür umfasst die Verpackungsanlage 1 einen zur Ermittlung mindesten eines Größenparameters der Artikelgruppe 22 ausgebildeten Sensor 14, der insbesondere in dem Transportbereich 3 zwischen dem Einteilmodul 2 und dem Verpackungsmodul 40 angeordnet ist.

Der Sensor 14 kann vorzugsweise als Lichtschrankenanordnung oder als Kamerasystem mit Bildauswertung ausgebildet sein. Insbesondere kann der Sensor 14 durch eine Lichtschrankenanordnung gebildet sein, welche sich oberhalb des Transportbereichs 3 quer zur Transportrichtung TR der Artikelgruppen 22 erstreckt.

Durch die Lichtschrankenanordnung kann die exakte Länge der Artikelgruppe 22 oder die relative Position der Artikelgruppe 22 innerhalb der Verpackungsanlage 1 bestimmt werden.

Die Transportbereiche 3 und 13 können hierbei mindestens einen Endlosförderer umfassen, insbesondere können die Transportbereiche 3 und 13 jeweils aus ein oder mehreren fluchtenden Horizontalfördereinrichtungen gebildet sein.

Zudem umfasst die Verpackungsanlage 1 eine Steuerungseinrichtung 16. Die Steuerungseinrichtung 16 ist dazu ausgebildet, die Daten des Sensors 14 mit einem Sollwert zu vergleichen, insbesondere mit einem definierten Sollwert, welcher in der Steuerungseinrichtung 16 als Information abgespeichert ist.

Gemäß einer Ausführungsform wird durch den Sensor 14 eine Länge der Artikelgruppe 22 parallel zur Transportrichtung TR ermittelt und der Wert wird an die Steuerungseinrichtung 16 übermittelt, die diesen mit dem abgespeicherten Sollwert vergleicht.

Bei Ermittlung einer Abweichung zwischen dem Größenparameter und dem Sollwert wird auf ein Fehlerereignis geschlossen und die Artikelgruppe 22 als "korrekt" oder "fehlerhaft" eingestuft.

Der Fehler kann beispielsweise darin liegen, dass eine Lücke zwischen den Artikeln 20 innerhalb der Artikelgruppe 22 ausgebildet ist, welche Lücke beim nachfolgenden Verpackungsprozess zur Ausbildung fehlerhafter Verpackungseinheiten 43 führt oder welche Lücke beim nachfolgenden Handhabungsprozess zu einem Fehler führt, der gegebenenfalls durch Blockierung von Maschinenkomponenten o.ä. zu einem Betriebsstopp des nachfolgenden Handhabungsmoduls oder der gesamten Verpackungsanlage 1 führt.

Alternativ oder zusätzlich kann der Fehler darin liegen, dass ein oder mehrere Artikel 20 der Artikelgruppe 22 deformiert sind oder dass ein oder mehrere Artikel 20 der Artikelgruppe 22 innerhalb der Artikelgruppe 22 falsch positioniert sind oder sogar in einer falschen Ausrichtung innerhalb der Artikelgruppe 22 angeordnet sind, beispielsweise kann es sich dabei um umgefallene Artikel 20 handeln.

Vorzugsweise ist vorgesehen, dass beim Erkennen einer fehlerhaften Artikelgruppe 22 oder beim Erkennen einer nachfolgend beschriebenen fehlerhaften Positionierung der Artikelgruppe 22 ein Ereignis definiert wird, welches Ereignis Steuerparameter für prozessbeeinflussende oder prozessverändernde Steuervorgaben im Verfahren generiert.

Eine Ausführungsform sieht vor, dass der Steuerparameter zu einem Anhalten zumindest des betroffenen Teilabschnittes der Verpackungsanlage 1 führt.

Alternativ kann beim Erkennen einer fehlerhaften Artikelgruppe 22 oder einer fehlerhaften Positionierung der Artikelgruppe 22 ein Ereignis definiert werden, aus welchem Ereignis ein Fehlerereignis abgeleitet wird, das zumindest gespeichert und über eine Benutzerschnittstelle 19 visualisiert oder auf sonstige Weise einem Benutzer zugänglich gemacht wird. Insbesondere wird der Benutzer über die Benutzerschnittstelle 19 somit zeitnah informiert, um gegebenenfalls entsprechende Maßnahmen einleiten zu können. Optional kann zusätzlich ein akustisches Warnsignal vorgesehen sein, um den Benutzer auf die neu bereitgestellte Information zeitnah aufmerksam zu machen.

Als Größenparameter wird eine Position der Artikelgruppe 22 auf dem Transportbereich 3 ermittelt. Dann liegt der Fehler darin, dass die Position der Artikelgruppe 22 von ihrer Soll- Position abweicht. Dies ist problematisch, da eine fehlerhafte Positionierung der Artikelgruppen 22 zu Problemen bei der nachfolgenden Handhabung führen kann. Eine Fehl- Positionierung entsteht dadurch, dass die Artikelgruppe 22 einen Schlupf gegenüber Transporteinrichtungen aufweist. Eine solche Fehl- Positionierung weist auf eine mögliche Verschmutzung des Transportbereichs 3 oder einer Transporteinrichtung innerhalb des Einteilmoduls 2 hin. In diesem Fall erfolgt eine Visualisierung über die Benutzerschnittstelle 19, die den Benutzer zur Überprüfung der Transporteinrichtungen auf Verschmutzung hin auffordert. In diesem Zusammenhang efrolgt eine Visualisierung eines Bereichs, welcher zuerst vom Benutzer überprüft werden sollte.

Eine weitere Ausführungsform sieht vor, dass aus dem definierten Ereignis zumindest ein Steuerparameter abgeleitet wird, aus dem prozessbeeinflussende oder prozessverändernde Steuervorgaben für das Verfahren gebildet werden.

Beispielsweise kann der Steuerparameter die Aktivierung einer Entnahmeeinrichtung 30 vorsehen, welche Entnahmeeinrichtung 30, 30-1 dazu ausgebildet ist, die als fehlerhaft erkannten Artikelgruppen 22 vor der weiteren Handhabung aus der Verpackungsanlage 1 zu entnehmen und somit aus dem Verpackungsprozess auszuschleusen.

Alternativ kann eine Entnahmevorrichtung 30-2 vorgesehen sein, welche Entnahmeeinrichtung 30-2 dazu ausgebildet ist, die aus einer fehlerhaft erkannten Artikelgruppe 22 gebildete Verpackungseinheit 43 vor der weiteren Handhabung aus der Verpackungsanlage 1 zu entnehmen und somit aus dem Verpackungsprozess auszuschleusen.

Die Entnahmeeinrichtung 30 kann beispielsweise durch einen Roboter gebildet sein, welcher Roboter die als fehlerhaft erkannten Artikelgruppen 22 oder Verpackungseinheiten 43 erfasst und in eine Ausschussbox überführt. Alternativ kann die Entnahmeeinrichtung 30 durch einen Schieber o.ä. gebildet wird, welcher Schieber querbeweglich zu der Transportrichtung TR der Artikelgruppen 22 oder Verpackungseinheiten 43 ausgebildet ist und welcher Schieber die als fehlerhaft erkannten Artikelgruppen 22 oder Verpackungseinheiten 43 in eine neben dem die Artikelgruppen 22 oder Verpackungseinheiten 43 der weiteren Handhabung zuführenden Transportbereich 3 oder 13 angeordneten Ausschussbox überführt.

Das Verpackungsmodul 40 kann gemäß einer Ausführungsform durch ein Faltmodul gebildet werden, in welchem Faltmodul die Artikelgruppen 22 jeweils zumindest teilweise mit einem aus einem Kartonzuschnitt gebildeten Umverpackungsmaterial umhüllt werden. Insbesondere wird die Artikelgruppe 22 auf einem Kartonzuschnitt angeordnet und durch Falten des Kartonzuschnitts wird ein die Artikelgruppe 22 umhüllender Umkarton gebildet. Alternativ kann die Artikelgruppe 22 auf einem Kartonzuschnitt angeordnet, der nachfolgend durch Auffalten von Randbereichen zu einem Tray ausgebildet wird.

Das Verpackungsmodul 40 kann gemäß einer alternativen Ausführungsform durch ein Einsetzmodul gebildet werden, in welchem Einsetzmodul die Artikelgruppen 22 jeweils in einen Karton oder ein Tray oder ein Basket eingesetzt werden.

Das Verpackungsmodul 40 kann auch durch ein Applikationsmodul gebildet werden, in welchem Applikationsmodul die Artikelgruppen 22 jeweils zumindest teilweise mit einem Kartonzuschnitt zusammengefasst werden, welcher Kartonzuschnitt von oben auf die Artikel 20 appliziert wird, so dass die Artikel 20 zumindest bereichsweise innerhalb von Durchtrittsöffnungen des Kartonzuschnitts aufgenommen sind. Die dadurch hergestellten Verpackungseinheiten 43 werden auch als Greifkartonverpackungen bezeichnet.

Eine alternative Ausführungsform der Verpackungsanlage 1 kann vorsehen, dass das Verpackungsmodul 40 durch ein Klebemodul gebildet wird, in welchem Klebemodul die Artikelgruppen 22 jeweils zumindest teilweise durch ein Klebemittel zusammengefasst werden, welches Klebemittel zwischen die Artikel 20 eingebracht wird, so dass die Artikel 20 haftend miteinander verbunden werden. Die dadurch hergestellten Verpackungseinheiten 43 werden auch als Klebegebinde bezeichnet.

Eine alternative Ausführungsform der Verpackungsanlage 1 kann vorsehen, dass das Verpackungsmodul 40 durch ein Umreifungsmodul gebildet wird, in welchem Umreifungsmodul die Artikelgruppen 22 jeweils zumindest teilweise mit einem die Artikelgruppe 22 umspannenden Umreifungsband zusammengefasst werden, wobei das Umreifungsband die Außenmantelflächen der Artikel 20 teilweise umspannt. Die dadurch hergestellten Verpackungseinheiten 43 werden auch als Umreifungsgebinde bezeichnet.

Gemäß einer weiteren Ausführungsform kann die Verpackungsanlage 1 ein Folieneinschlagmodul und ein Schrumpfmodul umfassen (vergleiche auch Ausführungsform der Figuren 2 bis 5), welches Folieneinschlagmodul dazu ausgebildet ist, die Artikelgruppe 2 mit einem aus Schrumpffolie bestehenden Folienzuschnitt zu umhüllen und welches Schrumpfmodul dazu ausgebildet ist, die Schrumpffolie unter Ausbildung eines Schrumpfgebindes auf die Artikelgruppe 22 aufzuschrumpfen.

Verschiedene weitere Ausführungsformen einer ein Schrumpfmodul 5 umfassenden Verpackungsanlage 1 werden in den Figuren 2 bis 5 dargestellt. Hierbei ist vorgesehen, dass ein erster Größenparameter durch einen ersten Sensor 14 ermittelt wird und dass ein zweiter Sensor 15 einen zweiten Größenparameter zum Vergleich mit dem ersten Größenparameter ermittelt.

Im Zusammenhang mit den Figuren 2 bis 5 wird insbesondere eine weitere Ausführungsform des Verfahrens beschrieben, bei welcher ein erster Größenparameter der Artikelgruppe 22 sensorisch erfasst wird. Nach Durchlaufen mindestens eines Transportbereichs 3, 6 und/oder mindestens eines Handhabungsmoduls der Verpackungsanlage 1 wird ein zweiter Größenparameter der Artikelgruppe 22 sensorisch erfasst. Durch Bewertung und Vergleich des ersten Größenparameter mit dem zweiten Größenparameter wird mindestens ein Merkmalsparameter der als Schrumpfgebinde 25 ausgebildeten Verpackungseinheit 43 ermittelt.

Die Fig. 2 zeigt eine schematische Seitenansicht einer zweiten Ausführungsvariante einer Verpackungsanlage 1 zur Herstellung von Schrumpfgebinden 25.

Die Verpackungsanlage 1 umfasst ein als Einteilmodul 2 ausgebildetes erstes Handhabungsmodul, in welcher Artikel 20, beispielsweise Flaschen 21 oder Dosen o.ä. zu Artikelgruppen 22 zusammengestellt werden. Die Artikelgruppen 22 werden auf einem Transportbereich 3 in Transportrichtung TR zu einem als Folieneinschlagmodul 4 ausgebildeten zweiten Handhabungsmodul befördert, in welchem Folieneinschlagmodul 4 die Artikelgruppen 22 mit einem thermoplastischen Verpackungsmaterial 23 in Form einer Schrumpffolie 24 umhüllt werden.

Im Folieneinschlagmodul 4 wird zur Verpackung der Artikelgruppen 22 eine von einem Endlos-Folienvorrat 7 abgerollte Schrumpffolie 24 zur Verfügung gestellt. Vermittels einer Folientrennstation 8 wird ein Folienabschnitt abgetrennt und dieser Folienabschnitt wird mit der Artikelgruppe 22 zusammengeführt, wobei der Folienabschnitt um die Artikelgruppe 22 gehüllt wird.

Die derart mit Verpackungsmittel 42 umhüllten Artikelgruppen 22 werden über einen Transportbereich 6 einem als Schrumpfmodul 5 ausgebildeten dritten Handhabungsmodul zugeführt. In dem Schrumpfmodul 5 werden die mit Schrumpffolie 24 umhüllten Artikelgruppen 22 mit Schrumpfmittel beaufschlagt. Das Schrumpfmittel bewirkt, dass die Schrumpffolie 24 um die Artikel 20 der Artikelgruppe 22 aufschrumpft, wobei das Schrumpfgebinde 25 gebildet wird.

Das Schrumpfmodul 5 weist einen Innenraum 10 mit einer Transportstrecke 11 für den Transport der mit Verpackungsmaterial 23 umhüllten Artikelgruppen 22 in Transportrichtung TR auf. Die mit Verpackungsmaterial 23 umhüllten Artikelgruppen 22 können einbahnig oder mehrbahnig durch das Schrumpfmodul 5 geführt werden.

Das Schrumpfmodul 5 weist hier nur teilweise dargestellte Schrumpfmitteleinbringeinrichtungen auf, die dazu ausgebildet sind, Schrumpfmittel auf die mit Verpackungsmaterial 23 umhüllten Artikelgruppen 22 aufzubringen. Hierbei können zum einen seitliche Schrumpfmitteleinbringeinrichtungen (nicht dargestellt) vorgesehen sein, insbesondere seitliche Schachtwände, die eine zur jeweiligen Transportbahn hin gerichtete Ausströmfläche für Schrumpfmittel aufweisen.

Weiterhin kann eine untere Schrumpfmitteleinbringeinrichtung 12 in Form einer Bodenkammer o.ä. vorgesehen, welche sich unterhalb der Transportstrecke 11 befindet und dazu ausgebildet ist, Schrumpfmittel mit einer nach oben gerichteten Strömungskomponente durch die Transportstrecke 11 hindurch auf die Unterseite der mit Verpackungsmaterial 23 umhüllten Artikelgruppen 22 zu leiten.

Weiterhin kann vorgesehen sein, dass die Schrumpfgebinde 25 nach dem Verlassen des Innenraums 10 des Schrumpfmoduls 5 durch Kühleinrichtungen 9, beispielsweise Gebläse, mit Luft beaufschlagt werden, um diese abzukühlen und dadurch vor der weiteren Verarbeitung zu stabilisieren. Diese kühlen auch das die Transportstrecke 11 bildende Fördermittel.

Die fertigem Schrumpfgebinde 25 werden über einen nachfolgenden Transportbereich 13 weiteren Verpackungs- und/oder Verarbeitungsstationen zugeführt, bspw. einem Palettiermodul o. dgl. (nicht dargestellt).

Die Verpackungsanlage 1 umfasst einen ersten Sensor 14, der zur Ermittlung des mindesten einen ersten Größenparameters der Artikelgruppe 22 ausgebildet ist. Weiterhin umfasst die Verpackungsanlage einen zweiten Sensor 15, der zur Ermittlung des mindesten einen zweiten Größenparameters der Artikelgruppe ausgebildet ist. Die beiden Sensoren 14, 15 sind jeweils unterschiedlichen Transportbereichen 3, 6, 13 oder unterschiedlichen Handhabungsmodulen 2, 4, 5 der Verpackungsanlage 1 zugeordnet.

Die Transportbereiche 3, 6, 13 können hierbei mindestens einen Endlosförderer umfassen, insbesondere können die Transportbereiche 3, 6, 13 jeweils aus ein oder mehreren fluchtenden Horizontalfördereinrichtungen gebildet sein.

Bei der zweiten Ausführungsform der Fig. 2 ist der erste Sensor 14 zwischen dem Einteilmodul 2 und dem Folieneinschlagmodul 4 angeordnet und somit dem Transportbereich 3 zugeordnet. Der erste Sensor 14 ermittelt in diesem Fall Größenparameter der Artikelgruppe 22. Insbesondere kann vorgesehen sein, dass der erste Sensor 14 eine Länge der Artikelgruppe 22 in Transportrichtung TR ermittelt.

Die gewählte Formulierung der Anordnung zwischen dem Einteilmodul 2 und dem Folieneinschlagmodul 4 soll ausdrücken, dass damit nicht nur der Transportbereich 3 umfasst ist, sondern auch ein Übergangsbereich zwischen dem Einteilmodul 2 und dem Transportbereich 3 bzw. ein Übergangsbereich zwischen dem Transportbereich 3 und dem Folieneinschlagmodul 4.

Der zweite Sensor 15 ist im Ausgangsbereich des Schrumpfmoduls 5 oder in einem in Transportrichtung nach dem Schrumpfmodul 5 ausgebildeten, durch den Transportbereich 13 gebildeten Abförderbereich angeordnet und dient der Ermittlung mindesten eines zweiten Größenparameters der als Schrumpfgebinde 25 zusammengefassten Artikelgruppe 22.

Die Verpackungsanlage 1 umfasst eine Steuerungseinrichtung 16. Die Steuerungseinrichtung 16 ist dazu ausgebildet, die Daten des ersten Sensors 14 und des zweiten Sensors 15 zu bewerten und zu vergleichen, insbesondere die ersten Größenparameter und die zweiten Größenparameter, und dadurch Merkmalsparameter der Schrumpfgebinde 25 zu ermitteln.

Eine Ausführungsform sieht vor, dass die Steuerungseinrichtung 16 den vom ersten Sensor 14 ermittelten Wert als Sollwert bewertet, und dass die Steuerungseinrichtung 16 diesen mit dem durch den zweiten Sensor 15 ermittelten zweiten Größenparameter vergleicht.

Insbesondere wird durch den ersten Sensor 14 eine erste Länge der Artikelgruppe 22 parallel zur Transportrichtung TR ermittelt. Weiterhin wird durch den zweiten Sensor 15 als zweiter Größenparameter eine zweite Länge der als Schrumpfgebinde 25 zusammengefassten Artikelgruppe 22 parallel zu einer Transportrichtung TR des Schrumpfgebindes 25 ermittelt. Durch die Steuerungseinrichtung 16 werden die erste Länge und die zweite Länge bewertet und miteinander verglichen.

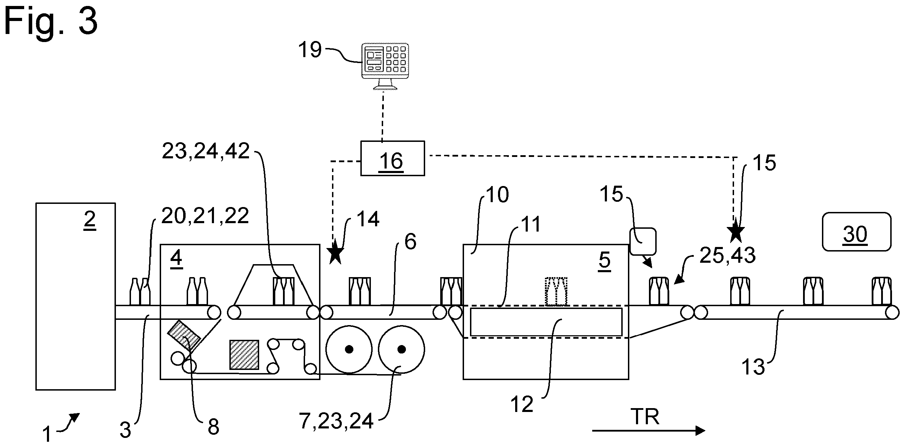

Die weitere Seitenansicht der Fig. 3 zeigt schematischer Darstellung eine dritte Ausführungsvariante einer Verpackungsanlage 1 zur Herstellung von Schrumpfgebinden 25. Die Ausführungsform der Fig. 3 unterscheidet sich nur in der Anordnung des erstens Sensors 14 von der Ausführungsform der Fig. 2, weshalb nur auf diese Unterschiede eingegangen wird.

Bei dem in Fig. 3 dargestellten Ausführungsbeispiel ist der erste Sensor 14 zwischen dem Folieneinschlagmodul 4 und dem Schrumpfmodul 5 angeordnet, wobei der Sensor 14 insbesondere zur Ermittlung mindesten eines ersten Größenparameters einer mit Schrumpffolie 24 umhüllten Artikelgruppe 22 dient.

Der zweite Sensor 15 ist im Ausgangsbereich des Schrumpfmoduls 5 oder in einem in Transportrichtung nach dem Schrumpfmodul 5 ausgebildeten, durch den Transportbereich 13 gebildeten Abförderbereich angeordnet und dient der Ermittlung mindesten eines zweiten Größenparameters der als Schrumpfgebinde 25 zusammengefassten Artikelgruppe 22.

Insbesondere wird durch den ersten Sensor 14 eine erste Länge der mit Schrumpffolie 24 umhüllten Artikelgruppe 22 parallel zur Transportrichtung TR ermittelt. Weiterhin wird durch den zweiten Sensor 15 als zweiter Größenparameter eine zweite Länge der als Schrumpfgebinde 25 zusammengefassten Artikelgruppe 22 parallel zu einer Transportrichtung TR des Schrumpfgebindes 25 ermittelt. Durch die Steuerungseinrichtung 16 werden die erste und die zweite Länge bewertet und miteinander verglichen.

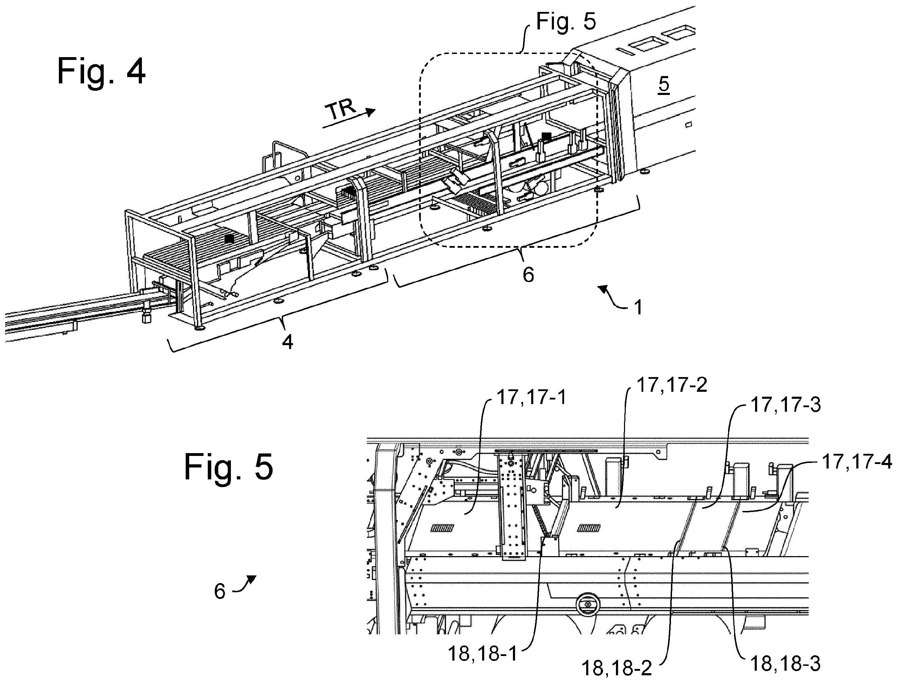

Die Fig. 4 zeigt in perspektivischer Darstellung eine vierte Ausführungsvariante einer Verpackungsanlage 1 zur Herstellung von Schrumpfgebinden und Fig. 5 zeigt ein Detail der in Fig. 4 dargestellten Verpackungsanlage 1.

Die Fig. 4 zeigt insbesondere das Folieneinschlagmodul 4, den Transportbereich 6 und das Schrumpfmodul 5. Wie dies in Fig. 5 gut zu erkennen ist, umfasst der Transportbereich 6 mehrere fluchtend angeordnete Horizontalförderbänder 17, wobei vier Horizontalförderbänder 17-1 bis 17-4 explizit in Fig. 5 benannt sind.

Sind kleine Lücken zwischen den zu einer Artikelgruppe 22 zusammengefassten und mit Schrumpffolie 24 umhüllten Artikel 21 vorhanden (vergleiche Figuren 2 und 3), dann besteht die Gefahr, dass sich diese Lücken beim Übergang der mit Schrumpffolie 24 umhüllten Artikel 21 von einem Horizontalförderband 17 zum nächsten weiter vergrößern. Bei jedem Übergang 18 schlagen die Artikel in ihren oberen Bereichen aneinander, wodurch sich der Abstand im Aufstandsbereich der Artikel erhöht. Die Übergangsbereiche 18-1, 18-2, 18-3 zwischen den Horizontalförderbänder 17-1 bis 17-4 sind in Fig. 5 explizit benannt.

Lücken zwischen den Artikeln 21 oder Fehlpositionierungen der Artikel 21 können auch auf andere Weise entstehen. Auch solche anderen Lücken oder Fehlpositionierungen können mit dem hier beschriebenen Verfahren sicher erkannt werden.

Bei der in Fig. 4 dargestellten vierten Ausführungsvariante einer Verpackungsanlage 1 ist der erste Sensor 14 in Transportrichtung TR vor dem Folieneinschlagmodul 4 angeordnet und dient insbesondere der Ermittlung mindesten eines ersten Größenparameters der aus dem Einteilmodul (nicht dargestellt, siehe Fig. 2) zugeführten Artikelgruppe 22.

Der zweite Sensor 15 ist zwischen dem Folieneinschlagmodul 4 und dem Schrumpfmodul 5 angeordnet und dient insbesondere der Ermittlung mindesten eines ersten Größenparameters der mit Schrumpffolie 24 umhüllten Artikelgruppe.

Insbesondere ist der zweite Sensor 15 in einem Bereich des Transportbereichs 6 angeordnet, welcher den vier Horizontalförderbändern 17-1 bis 17-4 in Transportrichtung TR nachfolgt und einen Übergangsbereich zum Schrumpfmodul 5 ausbildet.

Der zweite Sensor 15 kann aber auch in einem Übergangsbereich zwischen dem Folieneinschlagmodul 4 und dem Transportbereich 6 oder an beliebiger Position innerhalb des Transportbereichs 6 angeordnet sein.

Der erste Sensor 14 und/oder der zweite Sensor 15 können vorzugsweise als Lichtschrankenanordnung oder als Kamerasystem mit Bildauswertung ausgebildet sein. Insbesondere können der erste Sensor 14 und/oder der zweite Sensor 15 durch eine Lichtschrankenanordnung gebildet sein, welche sich oberhalb der Transportstrecke quer zur Transportrichtung TR erstreckt.

Durch die Lichtschrankenanordnung kann je nach deren Anordnung innerhalb der Verpackungsanlage 1 die exakte Länge der Artikelgruppe 22, der mit Schrumpffolie 24 umhüllten Artikelgruppe 22 oder der als Schrumpfgebinde 25 zusammengefassten Artikelgruppe 22 bestimmt werden.

Die ermittelte Länge kann insbesondere mit Informationen zu einer Soll-Länge, welche Soll-Länge insbesondere in der Steuerungseinrichtung 16 eingespeichert ist, verglichen werden. Alternativ kann die Soll-Länge direkt im Anschluss an die Ausbildung der Artikelgruppe 22 innerhalb des Einteilmoduls 2 oder am Ausgang des Einteilmoduls 2 sensorisch ermittelt werden. Gegebenenfalls kann dies bereits der Erfassung durch den ersten Sensor 14 entsprechen.

Besonders bevorzugt umfasst die Verpackungsanlage 1 eine Benutzeroberfläche 19, über welche beispielsweise bei einem Produktwechsel durch einen Benutzer neue Soll-Längen eingegeben werden können. Die neu definierten Soll-Längen werden der Steuerungseinrichtung 16 als Informationen bereitgestellt.

Bei beiden der in den Figuren 2, 3 und 4 dargestellten Verpackungsanlagen 1 kann bei der Bewertung und dem Vergleich der ermittelten Größenparameter ein Korrekturfaktor einbezogen wird, welcher Korrekturfaktor die Dicke der Schrumpffolie 24 berücksichtigt oder welcher Korrekturfaktor die Dicke und die Schrumpfung der Schrumpffolie 24 berücksichtigt.

Vorzugsweise wird aus dem mindestens einen ermittelten Merkmalsparameter eine Aussage über die Qualität des Schrumpfgebindes abgeleitet wird. Lücken zwischen den Artikeln 20 innerhalb des Schrumpfgebindes 25 sind ein Indiz für fehlerhafte, lockere Schrumpfgebinde 25, welche insbesondere in der nachfolgenden Handhabung zu Problemen im Produktionsablauf führen können.

Eine von einem Sollwert abweichende Größe kann auch einen Hinweis liefern, dass beispielsweise Artikel zerdrückt oder umgefallen sind. Aus diesem Grund führen auch Größenparameter, die einen zu kleinen Wert aufweisen, zur Einstufung der Schrumpfgebinde als fehlerhaft.

Deshalb sieht eine Ausführungsform vor, dass aus den ersten Größenparametern und zweiten Größenparametern eine Ausbildung eines Abstands zwischen den Artikeln 20 im Schrumpfgebinde 25 ermittelt wird, welcher Abstand zur Ausbildung deformierter und/oder instabiler Schrumpfgebinde 25 führt. Somit ist es möglich, die jeweiligen Schrumpfgebinde 25 als "korrekt" oder als "fehlerhaft" einzustufen.

Beim Erkennen fehlerhafter Schrumpfgebinde kann ein Ereignis definiert werden, welches Ereignis Steuerparameter für prozessbeeinflussende oder prozessverändernde Steuervorgaben im Verfahren generiert.

Eine Ausführungsform sieht vor, dass aus dem definierten Ereignis ein Fehlerereignis abgeleitet wird, das zu einem Anhalten zumindest des betroffenen Teilabschnittes der Verpackungsanlage führt, insbesondere damit das fehlerhafte Schrumpfgebinde entnommen werden kann.

Eine andere Ausführungsform sieht vor, dass aus dem definierten Ereignis zumindest ein Steuerparameter abgeleitet wird, aus dem prozessbeeinflussende oder prozessverändernde Steuervorgaben für das Verfahren gebildet werden. Beispielsweise kann der Steuerparameter die Aktivierung einer Entnahmeeinrichtung 30 (siehe Fig. 1) vorsehen, welche Entnahmeeinrichtung 30 dazu ausgebildet ist, die als fehlerhaft erkannten Schrumpfgebinde 25 vor der weiteren Handhabung aus der Verpackungsanlage 1 zu entnehmen und somit aus dem Verpackungsprozess auszuschleusen.

Eine weitere Ausführungsform kann vorsehen, dass aus dem definierten Ereignis ein Fehlerereignis abgeleitet wird, das zumindest gespeichert und über die Benutzerschnittstelle 19 visualisiert oder auf sonstige Weise einem Benutzer zugänglich gemacht wird. Insbesondere wird der Benutzer über die Benutzerschnittstelle 19 somit zeitnah informiert, um gegebenenfalls entsprechende Maßnahmen einleiten zu können. Optional kann zusätzlich ein akustisches Warnsignal vorgesehen sein, um den Benutzer auf die neu bereitgestellte Information zeitnah aufmerksam zu machen.

Für das hier beschriebene Verfahren ist es nicht zwingend notwendig, die Verpackungsanlage 1 mit weiteren Sensoren 14, 15 auszustatten, um die beschriebene Überwachung durchführen zu können. Stattdessen können bereits in der Verpackungsanlage 1 vorhandenen Sensoren verwendet werden, deren ermittelte Daten nunmehr weiter bewertet und analysiert werden. Es ist in diesem Fall nur notwendig, eine Steuerungseinrichtung 16 der Verpackungsanlage 1 mit entsprechenden Informationen und/oder Bewertungsalgorithmen auszustatten, um das vorbeschriebene Verfahren durchzuführen.

### Bezugszeichenliste

- 1: Verpackungsanlage
- 2: Einteilmodul
- 3: Transportbereich
- 4: Folieneinschlagmodul
- 5: Schrumpfmodul
- 6: Transportbereich
- 7: Endlos-Folienvorrat
- 8: Folientrennstation
- 9: Kühleinrichtung
- 10: Innenraum
- 11: Transportstrecke
- 12: untere Schrumpfmitteleinbringeinrichtung
- 13: Transportbereich
- 14: erster Sensor
- 15: zweiter Sensor
- 16: Steuerungseinrichtung
- 17, 17-1 bis 17-4: Horizontalförderband
- 18: Übergang
- 18-1 bis 18-3: Übergangsbereich
- 19: Benutzeroberfläche
- 20: Artikel
- 21: Flaschen
- 22: Artikelgruppe
- 23: thermoplastisches Verpackungsmaterial
- 24: Schrumpffolie
- 25: Schrumpfgebinde
- 30, 30-1, 30-2: Entnahmeeinrichtung
- 40: Verpackungsmodul
- 42: Verpackungsmittel
- 43: Verpackungseinheit
- TR: Transportrichtung

## Patentansprüche

1. Verfahren zur Steuerung einer Verpackungsanlage (1) zur Herstellung von Verpackungseinheiten (43),
wobei die Verpackungsanlage (1) Bestandteil einer Getränkebehandlungsanlage ist,
- bei welchem Verfahren Artikelgruppen (22) umfassend mindestens zwei Artikel (20) gebildet werden,
- wobei mindestens ein Größenparameter der Artikelgruppe (22) beim Durchlaufen mindestens eines Transportbereichs sensorisch erfasst wird,
- und der mindestens eine Größenparameter mit einem Sollwert verglichen wird,
**dadurch gekennzeichnet, dass**
als Größenparameter eine Position der Artikelgruppe (22) auf einem Transportbereich (3) der Verpackungsanlage (1) ermittelt wird,
ein Fehler darin liegt, dass die Position der Artikelgruppe (22) von ihrer Soll-Position abweicht,
eine Fehl-Positionierung dadurch entsteht, dass die Artikelgruppe (22) einen Schlupf gegenüber einer Transporteinrichtung aufweist, welcher Schlupf durch eine Verschmutzung der Transporteinrichtung entsteht, und
eine Visualisierung über eine Benutzerschnittstelle erfolgt, die den Benutzer zur Überprüfung der Transportbereiche auf Verschmutzung hin auffordert, wobei eine Visualisierung eines bestimmten Transportbereichs erfolgt, welcher hierbei zuerst vom Benutzer überprüft werden sollte.

2. Verfahren nach Anspruch 1, wobei bei Ermittlung einer Abweichung zwischen dem Größenparameter und dem Sollwert auf ein Fehlerereignis geschlossen wird und wobei die Artikelgruppe (22) als "korrekt" oder "fehlerhaft" eingestuft wird.

3. Verfahren nach Anspruch 2, wobei beim Erkennen einer fehlerhaften Artikelgruppe (22) oder beim Erkennen einer fehlerhaften Positionierung der Artikelgruppe (22) ein Ereignis definiert wird, welches Ereignis Steuerparameter für prozessbeeinflussende oder prozessverändernde Steuervorgaben im Verfahren generiert.

4. Verfahren nach Anspruch 3, wobei der Steuerparameter zu einem Anhalten zumindest des betroffenen Teilabschnittes der Verpackungsanlage (1) führt.

5. Verfahren nach Anspruch 2, wobei beim Erkennen einer fehlerhaften Artikelgruppe (22) oder beim Erkennen einer fehlerhaften Positionierung der Artikelgruppe (22) ein Ereignis definiert wird, aus welchem Ereignis ein Fehlerereignis abgeleitet wird, das zumindest gespeichert und über eine Benutzerschnittstelle (19) visualisiert oder auf sonstige Weise einem Benutzer zugänglich gemacht wird.

6. Verfahren nach Anspruch 3, bei dem eine Entnahmeeinrichtung (30) angesteuert wird, welche Entnahmeeinrichtung (30) die als fehlerhaft erkannten Artikelgruppe (22) aus der Verpackungsanlage (1) entnimmt oder aus dem Verpackungsprozess ausschleust, insbesondere welche Entnahmeeinrichtung (30) die als fehlerhaft erkannten Artikelgruppe (22) vor der weiteren Handhabung aus der Verpackungsanlage (1) entnimmt oder aus dem Verpackungsprozess ausschleust.

7. Verfahren nach einem der voranstehenden Ansprüche zur Steuerung einer Verpackungsanlage (1) zur Herstellung von Kartongebinden oder Tray-Gebinden, bei welchem Verfahren die Artikelgruppen (22) jeweils zumindest teilweise mit einem aus einem Kartonzuschnitt gebildeten Umverpackungsmaterial umhüllt werden oder bei welchem Verfahren die Artikelgruppen (22) in einen Karton oder ein Tray oder ein Basket eingesetzt werden.

8. Verfahren nach einem der Ansprüche 1 bis 6 zur Steuerung einer Verpackungsanlage (1) zur Herstellung von mit einer Greifkartonverpackung ausgestatteten Verpackungseinheiten (43), bei welchem Verfahren die Artikelgruppen (22) jeweils zumindest teilweise mit einem Kartonzuschnitt zusammengefasst werden, welcher Kartonzuschnitt von oben auf die Artikel (20) appliziert wird, so dass die Artikel (20) zumindest bereichsweise innerhalb von Durchtrittsöffnungen des Kartonzuschnitts aufgenommen sind.

9. Verfahren nach einem der Ansprüche 1 bis 6 zur Steuerung einer Verpackungsanlage (1) zur Herstellung von Schrumpfgebinden (25), bei welchem Verfahren die Artikelgruppen (22) jeweils mit einer Schrumpffolie (23) umhüllt werden, welche Schrumpffolie (23) zur Ausbildung eines Schrumpfgebindes (25) auf die jeweilige Artikelgruppe (22) aufgeschrumpft wird.

10. Verfahren nach einem der voranstehenden Ansprüche, bei dem ein erster Größenparameter der Artikelgruppe (22) sensorisch erfasst wird, und wobei nach Durchlaufen mindestens eines Transportbereichs oder nach Durchlaufen mindestens eines Teilabschnitts eines Transportbereichs oder nach Durchlaufen mindestens eines Handhabungsmoduls der Verpackungsanlage (1) ein zweiter Größenparameter der Artikelgruppe (22) sensorisch erfasst wird,
wobei durch Bewertung und Vergleich des ersten Größenparameter mit dem zweiten Größenparameter mindestens ein Merkmalsparameter der Verpackungseinheit (43) ermittelt wird.

11. Verpackungsanlage (1) zur Herstellung von Verpackungseinheiten (43), wobei die Verpackungsanlage (1) Bestandteil einer Getränkebehandlungsanlage ist, die Verpackungsanlage (1) umfassend zumindest
- ein als Einteilmodul (2) ausgebildetes erstes Handhabungsmodul zur Zusammenstellung von mindestens zwei Artikeln (20) zu einer Artikelgruppe (22),
- mindestens einen Transportbereich (3) für die Artikelgruppen (22),
- wobei mindestens einem Transportbereich ein Sensor (14) zur Ermittlung mindesten eines Größenparameters der Artikelgruppe (22) zugeordnet ist,
wobei die Verpackungsanlage (1) eine Steuerungseinrichtung (16) umfasst, welche Steuerungseinrichtung (16) dazu ausgebildet ist, die Daten des Sensors (14) mit einem definierten Sollwert zu vergleichen, wobei die Steuerungseinrichtung (16) dazu ausgebildet ist, ein Verfahren gemäß der Ansprüche 1 bis 10 anzusteuern.

12. Verpackungsanlage (1) nach Anspruch 11, wobei die Verpackungsanlage (1) eine Entnahmeeinrichtung (30) umfasst, welche Entnahmeeinrichtung (30) dazu ausgebildet ist, als fehlerhaft erkannte Artikelgruppen (22) aus der Verpackungsanlage (1) zu entnehmen oder aus dem Verpackungsprozess auszuschleusen, insbesondere welche Entnahmeeinrichtung (30) dazu ausgebildet ist, als fehlerhaft erkannte Artikelgruppen (22) vor der weiteren Handhabung aus der Verpackungsanlage (1) zu entnehmen oder aus dem Verpackungsprozess auszuschleusen.

13. Verpackungsanlage (1) nach einem der Ansprüche 11 und 12, welche Verpackungsanlage (1) mindestens ein Verpackungsmodul (40) umfasst,
- welches Verpackungsmodul (40) durch ein Faltmodul gebildet wird, in welchem Faltmodul die Artikelgruppen (22) jeweils zumindest teilweise mit einem aus einem Kartonzuschnitt gebildeten Umverpackungsmaterial umhüllt werden, oder
- welches Verpackungsmodul (40) durch ein Einsetzmodul gebildet wird, in welchem Einsetzmodul die Artikelgruppen (22) jeweils in einen Karton oder ein Tray oder ein Basket eingesetzt werden, oder
- welches Verpackungsmodul (40) durch ein Applikationsmodul gebildet wird, in welchem Applikationsmodul die Artikelgruppen (22) jeweils zumindest teilweise mit einem Kartonzuschnitt zusammengefasst werden, welcher Kartonzuschnitt von oben auf die Artikel (20) appliziert wird, so dass die Artikel (20) zumindest bereichsweise innerhalb von Durchtrittsöffnungen des Kartonzuschnitts aufgenommen sind, oder
- welches Verpackungsmodul (40) durch ein Klebemodul gebildet wird, in welchem Klebemodul die Artikelgruppen (22) jeweils zumindest teilweise durch ein Klebemittel zusammengefasst werden, welches Klebemittel zwischen die Artikel (20) eingebracht wird, so dass die Artikel (20) haftend miteinander verbunden sind, oder
- welches Verpackungsmodul (40) durch ein Umreifungsmodul gebildet wird, in welchem Umreifungsmodul die Artikelgruppen (22) jeweils zumindest teilweise mit einem die Artikelgruppe (22) umspannenden Umreifungsband zusammengefasst werden, oder
- welche Verpackungsanlage (1) ein Folieneinschlagmodul (4) und ein Schrumpfmodul (5) umfasst, welches Folieneinschlagmodul (4) dazu ausgebildet ist, die Artikelgruppe (22) mit einem aus Schrumpffolie (23) bestehenden Folienzuschnitt zu umhüllen und welches Schrumpfmodul (5) dazu ausgebildet ist, die Schrumpffolie (23) unter Ausbildung eines Schrumpfgebindes (25) auf die Artikelgruppe (22) aufzuschrumpfen.

14. Verpackungsanlage (1) nach einem der Ansprüche 11 bis 13, umfassend
- mindestens ein Verpackungsmodul (40), sowie
- einen zur Ermittlung mindesten eines ersten Größenparameters der Artikelgruppe (22) ausgebildeten ersten Sensor (14),
- einen zur Ermittlung mindesten eines zweiten Größenparameters der Artikelgruppe (22) ausgebildeten zweiten Sensor (15),
- wobei der erste Sensor (14) einem Transportbereich oder einem Handhabungsmodul der Verpackungsanlage (1) zugeordnet ist, und wobei der zweite Sensor einem anderen Transportbereich oder einem nachgeordneten Transportabschnitt des Transportbereichs oder einem anderen Handhabungsmodul der Verpackungsanlage (1) zugeordnet ist, und
- wobei die Steuerungseinrichtung (16) der Verpackungsanlage (1) dazu ausgebildet ist, die Daten des ersten Sensors (14) und des zweiten Sensors (15) zu bewerten und zu vergleichen und dadurch Merkmalsparameter der Artikelgruppe (22), der mit Verpackungsmittel (23) umhüllten Artikelgruppe (22) oder der die Artikelgruppe (22) umfassenden Verpackungseinheit (43) zu ermitteln.

## Claims

1. A method used to control a packaging facility (1) for the production of packaging units (43), wherein the packaging facility (1) is part of a beverage treatment facility,
- in which method article groups (22) comprising at least two articles (20) are formed,
- wherein at least one physical parameter of the article group (22) is sensor-detected while the article group (22) passes through at least one transport area,
- and the at least one physical parameter is compared with a target value,
the method being **characterised in that**
a position of the article group (22) on a transport area (3) of the packaging facility (1) is determined as the physical parameter,
an error is present **in that** the position of the article group (22) deviates from its target position,
an incorrect positioning results from the article group (22) having a slippage in relation to a transport device, which slippage results from a contamination of the transport device, and
a visualisation is carried out via a user interface, which prompts the user to check the transport areas for contamination, wherein a visualisation of a specific transport area is carried out, which in this context should first be checked by the user.

2. The method according to claim 1, wherein an error event is inferred upon detection of a deviation between the physical parameter and the target value, and wherein the article group (22) is classified as "correct" or "faulty".

3. The method according to claim 2, wherein an event is defined upon detection of a faulty article group (22) or upon detection of a faulty positioning of the article group (22), which event generates control parameters for process-influencing or process-changing control specifications in the method.

4. The method according to claim 3, wherein the control parameter leads to a stop of at least the affected partial section of the packaging facility (1).

5. The method according to claim 2, wherein an event is defined upon detection of a faulty article group (22) or upon detection of a faulty positioning of the article group (22), from which event an error event is inferred, which is at least stored and visualised via a user interface (19) or made accessible to a user in another manner.

6. The method according to claim 3, in which a removal device (30) is actuated, which removal device (30) removes the article group (22) identified as faulty from the packaging facility (1) or discharges it from the packaging process, in particular, which removal device (30) removes the article group (22) identified as faulty from the packaging facility (1) or discharges it from the packaging process prior to further handling.

7. The method according to one of the previous claims used to control a packaging facility (1) for the production of carton packs or tray packs, in which method the article groups (22) are each at least partially wrapped with an outer packaging material formed from a box blank, or in which method the article groups (22) are placed into a box or a tray or a basket.

8. The method according to one of the claims 1 to 6 used to control a packaging facility (1) for the production of packaging units (43) equipped with a gripping type carton, in which method the article groups (22) are each at least partially gathered together with a cardboard blank, which cardboard blank is applied onto the articles (20) from above such that the articles (20) are accommodated at least in some areas within passage openings in the box blank.

9. The method according to one of the claims 1 to 6 used to control a packaging facility (1) for the production of shrink packs (25), in which method the article groups (22) are each wrapped with a shrink film (23), which shrink film (23) is shrunk onto the particular article group (22) to form a shrink pack (25).

10. The method according to one of the previous claims, in which a first physical parameter of the article group (22) is sensor-detected, and wherein a second physical parameter of the article group (22) is sensor-detected after the article group (22) has passed through at least one transport area or after it has passed through at least one partial section of a transport area or after it has passed through at least one handling module of the packaging facility (1),
wherein at least one characteristic parameter of the packaging unit (43) is determined by assessment and comparison of the first physical parameter with the second physical parameter.

11. A packaging facility (1) for the production of packaging units (43), wherein the packaging facility (1) is part of a beverage treatment facility, the packaging facility (1) comprising at least
- one first handling module formed as a divider module (2) to assemble at least two articles (20) into an article group (22),
- at least one transport area (3) for the article groups (22),
- wherein at least one transport area is assigned a sensor (14) to detect at least one physical parameter of the article group (22),
wherein the packaging facility (1) comprises a control device (16), which control device (16) is designed to compare the data from the sensor (14) with a defined target value, wherein the control device (16) is designed to control a method according to claims 1 to 10.

12. The packaging facility (1) according to claim 11, wherein the packaging facility (1) comprises a removal device (30), which removal device (30) is designed to remove article groups (22) identified as faulty from the packaging facility (1) or to discharge them from the packaging process, in particular, which removal device (30) is designed to remove article groups (22) identified as faulty from the packaging facility (1) or to discharge them from the packaging process prior to further handling.

13. The packaging facility (1) according to one of the claims 11 and 12, which packaging facility (1) comprises at least one packaging module (40),
- which packaging module (40) is formed by a folding module, in which folding module the article groups (22) are each at least partially wrapped with an outer packaging material formed from a box blank, or
- which packaging module (40) is formed by a placing module, in which placing module the article groups (22) are each placed into a box or a tray or a basket, or
- which packaging module (40) is formed by an application module, in which application module the article groups (22) are each at least partially gathered together with a box blank, which box blank is applied onto the articles (20) from above such that the articles (20) are accommodated at least in some areas within passage openings in the box blank, or
- which packaging module (40) is formed by a gluing module, in which gluing module the article groups (22) are each at least partially gathered together with an adhesive, which adhesive is inserted between the articles (20) such that the articles (20) are adhesively joined together, or
- which packaging module (40) is formed by a strapping module, in which strapping module the article groups (22) are each at least partially gathered together with a strapping band wrapped around the article group (22), or
- which packaging facility (1) comprises a film wrapping module (4) and a shrink module (5), which film wrapping module (4) is designed to wrap the article group (22) into a length of film consisting of shrink film (23) and which shrink module (5) is designed to shrink the shrink film (23) onto the article group (22), thereby forming a shrink pack (25).

14. The packaging facility (1) according to one of the claims 11 to 13, comprising
- at least one packaging module (40), and
- a first sensor (14) designed to detect at least one first physical parameter of the article group (22),
- a second sensor (15) designed to detect at least one second physical parameter of the article group (22),
- wherein the first sensor (14) is assigned to a transport area or to a handling module of the packaging facility (1), and wherein the second sensor is assigned to another transport area or to a downstream transport section of the transport area or to another handling module of the packaging facility (1), and
- wherein the control device (16) of the packaging facility (1) is designed to assess and compare the data from the first sensor (14) and from the second sensor (15) and to thereby determine characteristic parameters of the article group (22), of the article group (22) wrapped in packaging means (23), or of the packaging unit (43) comprising the article group (22).

## Revendications

1. Procédé de commande d'une installation d'emballage (1) pour la production d'unités d'emballage (43), dans lequel ladite installation d'emballage (1) fait partie d'une installation de traitement de boissons,
- dans lequel procédé sont formés des groupes d'articles (22) comprenant au moins deux articles (20),
- dans lequel au moins un paramètre dimensionnel du groupe d'articles (22) est détecté par capteur lorsqu'il passe à travers au moins une zone de transport,
- et ledit au moins un paramètre dimensionnel est comparé à une valeur de consigne,
**caractérisé par le fait que**
l'on détermine en tant que paramètre dimensionnel une position du groupe d'articles (22) sur une zone de transport (3) de l'installation d'emballage (1),
une erreur réside dans **le fait que** la position du groupe d'articles (22) diffère de sa position cible,
un mauvais positionnement est dû au fait que le groupe d'articles (22) présente un glissement par rapport à un dispositif de transport, lequel glissement est causé par un encrassement du dispositif de transport,
une visualisation se fait via une interface utilisateur qui invite l'utilisateur à vérifier si les zones de transport sont encrassées, dans lequel une zone de transport spécifique est visualisée, laquelle devrait être vérifiée en premier par l'utilisateur.

2. Procédé selon la revendication 1, dans lequel, lors de la détection d'un écart entre le paramètre dimensionnel et la valeur de consigne, un événement d'erreur est déduit, et dans lequel le groupe d'articles (22) est classé comme "correct" ou "défectueux".

3. Procédé selon la revendication 2, dans lequel, lors de la détection d'un groupe d'articles défectueux (22) ou lors d'un positionnement incorrect du groupe d'articles (22), un événement est défini, lequel événement génère des paramètres de commande pour des spécifications de commande dans le procédé, qui influencent le processus ou modifient le processus.

4. Procédé selon la revendication 3, dans lequel le paramètre de commande entraîne un arrêt d'au moins la sous-section affectée de l'installation d'emballage (1).

5. Procédé selon la revendication 2, dans lequel, lors de la détection d'un groupe d'articles défectueux (22) ou lors de la détection d'un positionnement incorrect du groupe d'articles (22), un événement est défini, à partir duquel évènement est dérivé un événement d'erreur lequel est au moins stocké et visualisé via une interface utilisateur (19) ou est rendu accessible à un utilisateur par tout autre moyen.

6. Procédé selon la revendication 3, dans lequel un dispositif d'élimination (30) est commandé, lequel dispositif d'élimination (30) retire le groupe d'articles (22) reconnu comme étant défectueux de l'installation d'emballage (1) ou élimine celui-ci du processus d'emballage, en particulier lequel dispositif d'élimination (30) retire le groupe d'articles (22) reconnu comme étant défectueux de l'installation d'emballage (1) ou élimine celui-ci du processus d'emballage avant la manipulation ultérieure.

7. Procédé selon l'une quelconque des revendications précédentes, pour la commande d'une installation d'emballage (1) destinée à la production de multipacks à carton ou de multipacks à barquette, dans lequel procédé les groupes d'articles (22) sont chacun au moins en partie enveloppés d'un matériau d'emballage supplémentaire constitué d'une découpe de carton, ou dans lequel procédé les groupes d'articles (22) sont insérés dans un carton ou une barquette ou un panier.

8. Procédé selon l'une quelconque des revendications 1 à 6, pour la commande d'une installation d'emballage (1) destiné à la production d'unités d'emballage (43) munies d'un emballage en carton à préhension, dans lequel procédé les groupes d'articles (22) sont chacun au moins en partie regroupés par une découpe de carton, laquelle découpe de carton est appliquée d'en haut sur les articles (20) de sorte que les articles (20) sont reçus au moins par zones à l'intérieur d'ouvertures de passage de la découpe de carton.

9. Procédé selon l'une quelconque des revendications 1 à 6, pour la commande d'une installation d'emballage (1) destiné à la production de multipacks à film rétractable (25), dans lequel procédé les groupes d'articles (22) sont chacun enveloppés d'un film rétractable (23), lequel film rétractable (23) est appliqué par rétraction sur le groupe d'articles (22) respectif pour former un multipack à film rétractable (25).

10. Procédé selon l'une quelconque des revendications précédentes, dans lequel un premier paramètre dimensionnel du groupe d'articles (22) est détecté par capteur, et dans lequel, après avoir passé à travers au moins une zone de transport, ou après avoir passé à travers au moins une sous-section d'une zone de transport, ou après avoir passé à travers au moins un module de manipulation de l'installation d'emballage (1), un deuxième paramètre dimensionnel du groupe d'articles (22) est détecté par capteur,
permettant ainsi de déterminer au moins un paramètre caractéristique de l'unité d'emballage (43) en évaluant et en comparant le premier paramètre dimensionnel au deuxième paramètre dimensionnel.

11. Installation d'emballage (1) pour la production d'unités d'emballage (43), dans lequel ladite installation d'emballage (1) fait partie d'une installation de traitement de boissons, l'installation d'emballage (1) comprenant au moins
- un premier module de manipulation qui est conçu en tant que module à diviser (2) et destiné à réunir au moins deux articles (20) pour former un groupe d'articles (22),
- au moins une zone de transport (3) pour les groupes d'articles (22),
- dans lequel un capteur (14) destiné à déterminer au moins un paramètre dimensionnel du groupe d'articles (22) est associé à au moins une zone de transport,
dans lequel l'installation d'emballage (1) comprend un dispositif de commande (16), lequel dispositif de commande (16) est conçu pour comparer les données du capteur (14) à une valeur de consigne définie, dans lequel le dispositif de commande (16) est conçu pour commander un procédé selon les revendications 1 à 10.

12. Installation d'emballage (1) selon la revendication 11, dans laquelle l'installation d'emballage (1) comprend un dispositif d'élimination (30), lequel dispositif d'élimination (30) est conçu pour retirer des groupes d'articles (22) reconnus comme étant défectueux de l'installation d'emballage (1) ou pour éliminer ceux-ci du processus d'emballage, en particulier lequel dispositif d'élimination (30) est conçu pour retirer des groupes d'articles (22) reconnus comme étant défectueux de l'installation d'emballage (1) ou pour éliminer ceux-ci du processus d'emballage avant la manipulation ultérieure.

13. Installation d'emballage (1) selon l'une quelconque des revendications 11 et 12, laquelle installation d'emballage (1) comprend au moins un module d'emballage (40),
- lequel module d'emballage (40) est constitué d'un module de pliage, dans lequel module d'emballage les groupes d'articles (22) sont chacun au moins en partie enveloppés d'un matériau d'emballage supplémentaire constitué d'une découpe de carton, ou
- lequel module d'emballage (40) est constitué d'un module d'insertion, dans lequel module d'insertion les groupes d'articles (22) sont chacun insérés dans un carton ou une barquette ou un panier, ou
- lequel module d'emballage (40) est constitué d'un module d'application, dans lequel module d'application les groupes d'articles (22) sont chacun au moins en partie regroupés par une découpe de carton, laquelle découpe de carton est appliquée d'en haut sur les articles (20) de sorte que les articles (20) sont reçus au moins par zones à l'intérieur d'ouvertures de passage de la découpe de carton, ou
- lequel module d'emballage (40) est constitué d'un module de collage, dans lequel module de collage les groupes d'articles (22) sont chacun au moins en partie assemblés par un adhésif, lequel adhésif est appliqué entre les articles (20) de sorte que les articles (20) sont reliés entre eux de manière adhésive, ou
- lequel module d'emballage (40) est formé par un module de cerclage, dans lequel module de cerclage les groupes d'articles (22) sont chacun au moins en partie réunis par une bande de cerclage entourant le groupe d'articles (22), ou
- laquelle installation d'emballage (1) comprend un module d'enveloppement de film (4) et un module de rétraction (5), lequel module d'enveloppement de film (4) est conçu pour envelopper le groupe d'articles (22) avec une découpe de film constitué de film rétractable (23), et lequel module de rétraction (5) est conçu pour appliquer par rétraction le film rétractable (23) sur le groupe d'articles (22) afin de former un multipack à film rétractable (25).

14. Installation d'emballage (1) selon l'une quelconque des revendications 11 à 13, comprenant
- au moins un module d'emballage (40), et
- un premier capteur (14) destiné à déterminer au moins un premier paramètre dimensionnel du groupe d'articles (22),
- un deuxième capteur (15) destiné à déterminer au moins un deuxième paramètre dimensionnel du groupe d'articles (22),
- dans lequel le premier capteur (14) est associé à une zone de transport ou à un module de manipulation de l'installation d'emballage (1), et dans lequel le deuxième capteur est associé à une autre zone de transport ou à une section de transport de la zone de transport, située en aval, ou à un autre module de manipulation de l'installation d'emballage (1), et
- dans lequel le dispositif de commande (16) de l'installation d'emballage (1) est conçu pour évaluer et comparer les données du premier capteur (14) et du deuxième capteur (15) et pour ainsi déterminer des paramètres caractéristiques du groupe d'articles (22), du groupe d'articles (22) emballé de matériau d'emballage (23), ou de l'unité d'emballage (43) comprenant le groupe d'articles (22).
